# EUROPEAN PATENT APPLICATION

(11) **EP 3 220 335 A1**
(43) Date of publication of application: **20.09.2017**
(21) Application number: 16305298.8
(22) Date of filing: 18.03.2016
(51) Int. Cl.: G06Q 30/02, H04M 15/00

(54) **METHOD, FIRST, SECOND SERVER AND SYSTEM FOR ACCESSING A SERVICE**

(71) Applicant: GEMALTO SA, 92190 Meudon (FR)
(72) Inventor: DERHI, Roland, 13881 GEMENOS cedex (FR); SCHAETZEL, Maria, 13881 GEMENOS cedex (FR); VANDEWALLE, Laurent, 13881 GEMENOS cedex (FR); BORDAS, Aurélia, 13881 GEMENOS cedex (FR); KIEFFER, Brice, 13881 GEMENOS cedex (FR); RAFFA, Hugo, 13881 GEMENOS cedex (FR)

(57) **Abstract**

The invention relates to a method for accessing a service.

According to the invention, the method comprises the following steps. A first server 16 accesses information relating to a lack of rights for accessing a subscription, the subscription being related to a service subscriber. The first server accesses a set of at least one identifier relating to at least one device 112, as a device identifier set, each of the least one device relating to at least one person who is associated with or linked to the subscriber. The first server sends to a second server 18 a message 22 including a request to get a contribution accompanied with the device identifier set and an identifier relating to the subscriber. The second server generates an identifier relating to a contribution campaign, the contribution campaign identifier being associated with the identified subscriber. The second server determines an identifier relating to a third server 110 that allows addressing the third server. The second server sends to the third server a message 24 including a request to get a contribution accompanied with the contribution campaign identifier, the subscriber identifier and the device identifier set. The third server sends to at least one device identified within the device identifier set a message 26 including a request for getting a contribution accompanied with the contribution campaign identifier and the subscriber identifier. The at least one identified device sends to the third server a message 28 including a request to perform a transaction from an identified user account to the identified subscriber accompanied with a transaction amount and the contribution campaign identifier. And the first server receives a message 210 including a total transaction amount and the subscriber identifier.

The invention also relates to corresponding first server, second server and system.

## Description

### Field of the invention:

The invention relates generally to a method for accessing a service. Furthermore, the invention also pertains to a first server for accessing a service. Moreover, the invention relates to a second server for accessing a service. Lastly, the invention relates to a system for accessing a service as well.

### State of the art:

Nowadays, there are more and more communicating devices, such as Personal Digital Assistants (or PDA), tablets, mobile (tele)phones or other subscriber terminals that are connected to a mobile (radio-communication) network(s). The subscriber has to pay a Mobile Network Operator (or MNO) or a Mobile Virtual Network Operator (or MVNO) to access one or several (mobile) network services, like voice calls, visual and audio calls, exchanged text messages, via emails or Short Message Service (or SMS) type messages. The subscriber may not be able to pay her or his subscription. In such a case, the MNO or MVNO stops the current subscription and therefore subscriber access to the network services.

However, the subscriber may nevertheless desire to continue accessing the network services.

Thus, there is a need to provide a solution that allows a subscriber to continue benefiting from the network services.

### Summary of the invention:

The invention proposes a solution for solving the just herein above specified need by providing a method for accessing a service.

According to the invention, the method comprises the following steps. A first server accesses information relating to a lack of rights for accessing a subscription, the subscription being related to a subscriber to at least one service. The first server accesses a set of at least one identifier relating to at least one device, as a device identifier set, each of the least one device relating to at least one person who is associated with or linked to the subscriber. The first server sends to a second server a message including a request to get a contribution accompanied with the device identifier set and an identifier relating to the subscriber. The second server generates an identifier relating to a contribution campaign, the contribution campaign identifier being associated with the identified subscriber. The second server determines an identifier relating to a third server, the third server identifier allowing to address the third server. The second server sends to the third server a message including a request to get a contribution accompanied with the contribution campaign identifier, the subscriber identifier and the device identifier set. The third server sends to at least one device identified within the device identifier set a message including a request for getting a contribution accompanied with the contribution campaign identifier and the subscriber identifier. The at least one identified device sends to the third server a message including a request to perform a transaction from an identified user account to the identified subscriber accompanied with a transaction amount and the contribution campaign identifier. And the first server receives a message including a total transaction amount and the subscriber identifier.

The principle of the invention consists in that a first server collects information relating to a lack of rights for accessing a subscription associated with a service subscriber and one or several device identifiers, as a set of device identifiers. The concerned identified device(s) is(are) used by a person (people) who belong(s) to the friend(s) of the subscriber, the member(s) of the subscriber family or the acquaintance(s) of the subscriber. Then, the first server transmits to a second server a request to get a contribution along with the device identifiers and a subscriber identifier. The second server produces a contribution campaign identifier to be associated with the subscriber and a third server identifier. The second server transmits to the third server a request for obtaining a contribution along with the contribution campaign identifier, the subscriber identifier and the device identifiers. Then, the third server transmits to one or several devices a request for obtaining a contribution along with the contribution campaign identifier and the subscriber identifier. One or several devices send back to the third server a request to carry out a transaction from a device user account, like e.g. a Primary Account Number (or PAN), to the concerned subscriber along with a transaction amount and the contribution campaign identifier. The first server gets a total transaction amount and the subscriber identifier.

It is to be noted that one or several identifiers relating to the device(s) that is(are) used by a person or people to be solicited for contribution may be provided to the first server from a subscriber device(s) and/or a server(s), like e.g. a server(s) relating to a social network.

Greater is the number of people who are to be solicited greater is the opportunity for the concerned subscriber to get rights for accessing a subscription.

Thus, a subscriber who is not able to provide rights for accessing a subscription is helped by the person or people who contribute to bring part or all the needed rights for accessing the subscription.

Once the needed rights for accessing the subscription is obtained, the subscription is valid and the subscriber may continue benefiting a network service(s) which the subscriber has subscribed to.

The invention solution allows the concerned network operator to keep the subscriber as a customer and to continue getting revenue or the like for the concerned subscriber.

It is noteworthy that, instead of three servers, there may be one or two servers that implement the invention method.

Advantageously, prior to sending to the second server the request to get a contribution, the first server gets from a device relating to the subscriber a message including data relating to an approval of the subscriber.

According to a further aspect, the invention is a first server for accessing a service.

According to the invention, the first server is configured to:
- access information relating to a lack of rights for accessing a subscription, the subscription being related to a subscriber to at least one service;
- access a set of at least one identifier relating to at least one device, as a device identifier set, each of the least one device relating to at least one person who is associated with or linked to the subscriber;
- send to a second server a message including a request to get a contribution accompanied with the device identifier set and an identifier relating to the subscriber; and
- receive a message including a total transaction amount and the subscriber identifier.

According still to a further aspect, the invention is a second server for accessing a service.

According to the invention, the second server is configured to:
- receive a message including a request to get a contribution accompanied with a set of at least one identifier relating to at least one device, as a device identifier set, and an identifier relating to the subscriber;
- generate an identifier relating to a contribution campaign, the contribution campaign identifier being associated with the identified subscriber;
- determine an identifier relating to a third server, the third server identifier allowing to address the third server; and
- send to the third server a message including a request to get a contribution accompanied with the contribution campaign identifier, the subscriber identifier and the device identifier set.

According still to a further aspect, the invention is a system for accessing a service.

According to the invention, the system comprises a first server, a second server and a third server. The first server is configured to:
- access information relating to a lack of rights for accessing a subscription, the subscription being related to a subscriber to at least one service;
- access a set of at least one identifier relating to at least one device, as a device identifier set, each of the least one device relating to at least one person who is associated with or linked to the subscriber;
- send to the second server a message including a request to get a contribution accompanied with the device identifier set and an identifier relating to the subscriber; and
- receive a message including a total transaction amount and the subscriber identifier.

The second server is configured to:
- generate an identifier relating to a contribution campaign, the contribution campaign identifier being associated with the identified subscriber;
- determine an identifier relating to a third server, the third server identifier allowing to address the third server; and
- send to the third server a message including a request to get a contribution accompanied with the contribution campaign identifier, the subscriber identifier and the device identifier set;

And the third server is configured to:
- send to at least one device identified within the device identifier set a message including a request for getting a contribution accompanied with the contribution campaign identifier and the subscriber identifier; and
- receive from the at least one identified device a message including a request to perform a transaction from an identified user account to the identified subscriber accompanied with a transaction amount and the contribution campaign identifier.

### Brief description of the drawings:

Additional features and advantages of the invention will be more clearly understandable after reading a detailed description of one preferred embodiment of the invention, given as an indicative and non-limitative example, in conjunction with the following drawings:

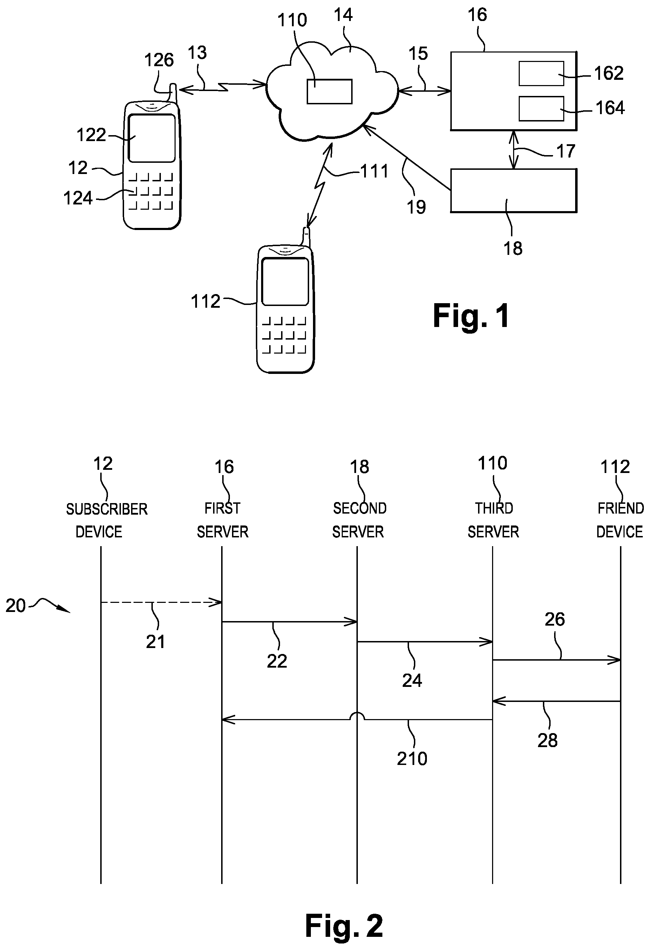

- Figure 1 is a simplified diagram of a mobile phone, as a subscriber device, that is connected to a first server connected to a second server connected to a third server, the first server being arranged to request, once informed about a lack of rights for accessing a subscription and one or several identifiers relating to another mobile phone, as a sponsor device, the second server to get a contribution along with the mobile phone identifiers and a subscriber identifier and to receive a total transaction amount and the subscriber identifier, the second server being arranged to generate a contribution campaign identifier associated with the identified subscriber, to determine a third server identifier, to send to the identified third server a request for getting a contribution along with the contribution campaign identifier, the subscriber identifier and the mobile phone identifiers, according to the invention; and
- Figure 2 illustrates an example of one message flow between the subscriber device, the first, the second, the third server and the sponsor device of figure 1, so that the subscriber decides preferably whether she/he does (or does not) initiate an exchange, through the three servers, with each sponsor device, so as to get rights for accessing a subscription.

### Detailed description:

Herein under is considered a case in which the invention method for accessing a service is implemented by three servers.

According to another embodiment, the invention method for accessing a service is implemented by one or two servers. According to such an embodiment (not represented), the first server is adapted to carry out the functions that are carried out by the second server and/or the third server and that are described infra.

Naturally, the herein below described embodiment is only for exemplifying purposes and is not considered to reduce the scope of the invention.

**Figure 1** shows schematically a first mobile phone 12, as a device relating to a subscriber, a first server 16, a second server 18, a third server 110 and a second mobile phone 112, as a sponsor device.

For sake of simplicity, the first mobile phone 12 and the second mobile phone 112 are termed herein after the first phone 12 and the second phone 112 respectively.

The first phone 12 and/or the second phone 112 may incorporate an embedded Universal Integrated Circuit Card (or eUICC), as a chip and a Secure Element (or SE) embedded within the first phone 12 and/or the second phone 112 respectively.

Within the present description, an SE is a smart object that includes a chip, protects access to data that the chip stores and is intended to communicate with the outside world.

Instead of being embedded, the SE chip may be removable and included within e.g. a smart card termed Subscriber Identity Module (or SIM) type card or the like.

As a removable SE, it may be a Secure Removable Module (or SRM), a smart dongle of the USB (acronym for "Universal Serial Bus") type, a (micro-)Secure Digital (or SD) type card or a Multi-Media type Card (or MMC) or any format card to be coupled to a host device.

The first phone 12 and/or the second phone 112 may be coupled or connected, as an SE host device, to the SE chip.

According to a particular embodiment, an SE chip is soldered to a Printed Circuit Board (or PCB) of the first and/or the second phone, as the SE host device.

According to another embodiment, the phone Input/Output (or I/O) interface with the SE chip is an International Organization for Standardization (or ISO) 7816 interface, as a contact interface, when the SE chip is inserted, in a removable manner, within the first and/or the second phone, as the SE host device.

Alternately, instead of a contact interface, the phone I/O interface with the SE chip is connected to or includes a Contact-Less (or CL) interface. The SE host device is connected to or includes means for communicating data while using preferably a Short Range (or SR) Radio-Frequency (or RF) link. The SR RF link may be related to any technology that allows the SE host device to exchange data, through a CL link, with the SE chip. The SR RF may be related to a Near Field Communication (or NFC) type communication technology.

Instead of a phone for the first or the second user device, it may be any other device including means for processing data, comprising or being connected to communication means for exchanging data with outside, and comprising or being connected to means for storing data.

As communication means, it may be wire and/or wireless communication means. The adjective "wireless" denotes notably that the communication means communicates via one or several RF links.

The RF may be fixed at several hundreds of MHz, like e.g., around 850, 900, 1800, 1900 and/or 2100 MHz, as Long Range (or LR) RF.

The first phone 12 is used by a user, as a subscriber to one or several services which the subscriber has subscribed to. The service(s) which the subscriber has subscribed to is(are) provided by an MNO, an MVNO or on its behalf, as a service provider.

It is assumed that the first phone 12 user, as a subscriber, does no more pay or have rights for accessing a corresponding subscription which the subscriber has previously subscribed to.

The first phone 12 and the second phone 112 include each preferably one or several (micro)processors (not represented), as data processing means, one or several memories (not represented), data storing means, and two or more I/O interfaces.

The first phone 12 is used for accessing one or several mobile radio-communication networks.

The mobile radio-communication network(s) (not represented) is(are) included within a network 14 that is connected to the first server 16.

The network 14 may comprise or be connected to an Internet type network.

As to the first 12 and the second 112 phone, it may be any device comprising or being connected to means for interfacing with a user, as a Man Machine Interface (or MMI), like e.g. a display screen 122, a keyboard 124, a loudspeaker (not represented), and/or comprising or being connected to an antenna 126 for exchanging data with outside.

The phone MMI allows a phone user to interact with the phone or an external entity, like e.g. the first server 16, the third server 110 or an SE chip.

The phone microprocessor processes data originating from either the phone memory or an external entity, like e.g. the first server 16, the third server 110 or an SE chip. The phone microprocessor executes one or several applications.

The phone memory(ies) store(s) an Operating System (or OS) and one or several applications to be executed by the phone microprocessor.

The phone memory(ies) may comprise one or several volatile memories and one and/or several non-volatile memories.

The phone memory(ies) and/or an external entity memory(ies) store(s) data.

The first phone 12 memory(ies) store(s) preferably data, like e.g. a set of device subscribers, as friends, members of the family and/or acquaintances of the first phone user, associated with one or several identifiers relating to one or several devices, like e.g. a mobile phone(s), a PDA(s), a tablet(s), a Personal Computer(s) and/or an(other) computer device(s).

The identifier(s) relating to one or several devices may include:
- a Mobile Station International Subscriber Directory Number(s) (or MSISDN);
- an International Mobile Subscriber Identity Number(s) (or IMSI);
- an International Mobile station Equipment Identity(ies) (or IMEI);
- an Uniform Resource Identifier(s) (or URI);
- an Uniform Resource Locator(s) (or URL); and/or
- an Internet Protocol (or IP) addressee(s).

As applications supported by the first phone 12, there may be at least one communication application for communicating with an external user device, like e.g. a phone call application, a Short Message Service (or SMS) type message communication application, an email type message communication application and/or the like. The applications supported by the first phone 12 operate only when the subscriber has a valid subscription (which the subscriber has effectively paid and/or provided rights for accessing it).

The first phone 12 is able to exchange data, in a distant manner, with the first server 16 and/or an entity(ies), like e.g. another mobile phone, such as the second phone 112, or user device, that is connected through or to the network 14.

The first phone memory(ies) (or an SE memory(ies)) stores data relating to one (or several) subscription(s) to one (or several) mobile radio-communication network(s).

Data relating to one subscription to a mobile radio-communication network includes:
- an IMSI, as a subscriber and service subscription identifier for accessing a mobile radio-communication network;
- a key Ki, as a network authentication key, allowing to authenticate the concerned subscriber to the concerned mobile radio-communication network;
- Milenage, as an authentication algorithm, allowing to authenticate the concerned subscriber to the concerned mobile radio-communication network;
- one or several passwords, like e.g. a Personal Identity Number (or PIN), and/or one or several cryptographic algorithm(s), as data relating to secret(s);
- a file system including one or several Elementary Files (or EF);
- one or several security keys, like a key(s) for encrypting/decrypting data and/or a key(s) for signing data a key(s);
- one or several applicative keys, like e.g. a key for accessing a user bank account through the mobile radio-communication network; and/or
- one or several user credentials, like e.g. a user name, an IDentifier (or ID) of the subscriber and/or a password, as data relating to the user.

The first phone memory(ies) (or an SE memory(ies)) stores preferably one or several Subscriber Identity Module (or SIM) type applications.

The SIM type application(s) allow(s) the first phone 12 to identify and authenticate to one or several mobile networks 14 by using at least part of the stored subscription data.

The first phone 12 executes, in a preferred manner, one or several security functions. The security functions may be supported by an SE coupled or connected to the first phone 12.

The security functions include preferably a user authentication process to be used prior to continuing an execution of an application that may be executed by the first phone 12 (or the SE chip). To authenticate the user, the user has to provide a PIN, one or several biometric prints, user credentials, a password, a passcode, as user authentication data and user reference data, that is stored within the first phone memory(ies) (or an SE memory(ies)). As biometric print(s), it may include one or several finger prints, one or several iris prints, one or several face prints and/or one or several voice prints relating to one or several authorized users.

The first phone 12 user, as subscriber, is preferably solicited, so as to give her or his approval prior to launching a contribution campaign.

To give her or his approval, the subscriber is preferably to be authenticated at the first phone 12 side and/or at the first server 16 side by using user data entered at the first phone 12 side and possibly sent from the first phone 12 to the first server 16, as a user authentication entity.

The first phone memory(ies) (or an SE memory(ies)) store(s) preferably data relating to a URI, a URL and/or an IP address of an external entity to be addressed, like e.g. the first server 16 and/or the second phone 112, as an interlocutor device.

The first server 16 is connected, through a bi-directional link 15, to the network 14.

The first server 16 is identified by a URI, an URL, an IP address and/or the like, as a first server identifier.

The first server 16 is able to be accessed from and to access, Over-The-Air (or OTA), Over-The-Internet (or OTI) or Over The Cloud (or OTC), a fleet of connected terminals or devices relating to one or several subscribers.

The first server 16 may be operated by an MNO, an MVNO and/or on its behalf, as a service provider.

The first server 16 is hosted by a computer with a processor(s) (not represented), as data processing means, and one or several I/O interfaces (not represented).

The first server 16 is preferably able to register subscription data, like e.g. an IMSI and/or an MSISDN, relating to each subscriber within a first database. Each concerned subscriber may be identified by using the associated IMSI, the associated MSISDN and/or other subscription data, as an identifier(s) of the subscriber.

The first server 16 is preferably arranged to request a registered subscriber to provide with a set of one or several devices, like e.g. the second phone 112, that are each used by a friend, a member family and/or an acquaintance of the subscriber, as a person associated with or linked to the subscriber.

The first server 16 includes one or several memories 162 and 164, as data storing means.

Instead of an internal memory(ies), the first server 16 is connected to an external memory(ies) (not represented) storing the first database and the second database.

The memory 162 stores the first database relating to subscribers. The first database includes information relating to rights for accessing a subscription for each concerned subscriber. Information relating to a lack of rights for accessing a subscription is associated with the subscription data relating to the subscriber using the first phone 12 (and other subscriber(s)) and other subscriber(s) who do not have enough rights for accessing a subscription.

The memory 164 stores a second database relating to device identifier sets for at least part of the subscribers registered within the first database. The second database includes a device identifier set for each subscriber. The concerned subscriber has sent, from the first phone 12 and/or another subscriber device, a set of one or several identifiers relating to one or several devices in which each device relates to or is used by a person who is associated with or linked to the subscriber. Such a person plays a role of a sponsor.

The first server 16 is arranged to access information relating to a lack of rights for accessing a subscription relating to a service subscriber, like e.g. the subscriber using the first phone 12, as a subscriber in need.

The first server 16 is preferably adapted to get from an external entity(ies), like e.g. the first phone 12 and/or another server(s), a set of one or several identifiers relating to one or several devices, as a device identifier set. Such a device identifier set providing is carried out preferably under the subscriber control, i.e. after having received data relating to an approval of the subscriber, as a subscriber in need.

The first server 16 is adapted to access a set of one or several identifiers relating to one or several devices, as a device identifier set. Each concerned device of such a device identifier set relates to a person who is associated with or linked to the subscriber.

The first server 16 is preferably configured to receive from a device relating to a concerned subscriber a message including data, like e.g. a PIN, relating to an approval of the subscriber. The first server 16 is preferably further configured to analyse whether the received data does or does not match expected user authentication data that is stored at or accessible from the first server 16. Only if the received data matches the expected user authentication data, the first server 16 continues a process for getting a contribution for the subscriber (in need) account.

The first server 16 is configured to send to the second server 18 a message including a request to get a contribution along with the device identifier set and an identifier relating to the subscriber (in need).

The first server 16 is arranged to receive a message including a total transaction (rights) amount and the identifier relating to the subscriber (in need).

The second server 18 is preferably connected, through a bi-directional link 17, to the first server 16.

The second server 18 is identified by a URI, an URL, an IP address and/or the like, as a second server identifier, that is stored at or accessible from the first server 16.

The second server 18 is an OTA, an OTI or an OTC server.

The second server 18 may play a role of a crowdfunding platform.

The second server 18 may be operated by an MNO, an MVNO and/or on its behalf, as a service provider. The service provider that manages the second server 18 may be the service provider that also manages the first server 16.

The second server 18 is hosted by a computer with one or several processors, as data processing means, one or several memories, as data storing means, and one or several I/O interfaces.

The second server 18 is arranged to receive a message including a request to get a contribution along with a device identifier set and a subscriber identifier.

The second server 18 is adapted to generate an identifier relating to a contribution campaign. Such a contribution campaign identifier is associated with the identified subscriber.

According to an essential feature of the invention, the second server 18 is configured to determine an identifier relating to a third server 110. Such a third server identifier allows addressing the third server 110. The third server 110 is preferably dedicated to the concerned subscriber (in need).

The second server 18 is arranged to send to the third server 110 a message including a request to get a contribution along with the (generated) contribution campaign identifier, the (received) subscriber identifier and the (associated) (received) device identifier set.

The third server 110 is preferably connected, through a link 19, to the second server 18.

The third server 110 is identified by a URI, an URL, an IP address and/or the like, as a third server identifier, that can be determined by the second server 18.

The third server 110 may be within, like e.g. a Short Message Service Center (or SMSC), or out of the network 14, like e.g. an OTA, an OTI or an OTC server.

The third server 110 may play a role of a crowdfunding platform.

The third server 110 may be operated by an MNO, an MVNO and/or on its behalf, as a service provider. The service provider that manages the third server 110 may be the service provider that also manages the second 18 and/or the first server 16.

The third server 110 is hosted by a computer with one or several processors, as data processing means, one or several memories, as data storing means, and one or several I/O interfaces.

The third server 110 is able to receive a message including a request to get a contribution along with a contribution campaign identifier, a subscriber identifier and a device identifier set.

The third server 110 is arranged to send to one or several devices, like e.g. the second phone 112, identified within the device identifier set a message including a request for getting a contribution along with the (received) contribution campaign identifier and the (received) subscriber identifier.

The third server 110 is configured to receive from the device(s) a message including a request to perform a transaction from an identified user account to the identified subscriber (in need) along with a transaction amount and the (received) contribution campaign identifier.

The third server 110 (or another server connected to it) is preferably configured to add the lastly received transaction amount to a transaction amount counter (previously initialized), so as to determine a total transaction amount to be transferred to the subscriber account, as the account to be credited.

The second phone 112 is used by a user, as a friend, a family member or an acquaintance of the subscriber in need.

Only one second phone 112, as a device relating to a friend, a family member or an acquaintance of the subscriber, that is connected to the third server 110 is represented for clarity reason.

The second phone 112 is used for contributing to bring part or all the rights for accessing the subscription relating to the subscriber in need.

As applications supported by the second phone 112, there may be at least one transaction application for transferring money, a voucher(s) and/or the like, as rights for accessing the subscription from an identified (second phone 112) user account, , as the account to be debited, to the first phone 12 subscriber account, as the account to be credited.

The identified user account may be an identified bank user account, a Primary Account Number (or PAN), a Dynamic Primary Account Number (or DPAN), a PAN alias, a PAN alternate, an identified voucher user account and/or an identified user rights account.

The second phone 112 executes, in a preferred manner, one or several security functions. The security functions may be supported by an SE coupled or connected to the second phone 112.

The security functions include preferably a user authentication process to be used prior to continuing an execution of a transaction application that may be executed by the second phone 112 (or the SE chip). To authenticate the user, the user has to provide a PIN, one or several biometric prints, user credentials, a password, a passcode, as user authentication data and user reference data, that is stored within the second phone 112 memory(ies) (or an SE memory(ies)).

The second phone 112 user, as a sponsor, is preferably solicited, so as to give her or his approval prior to transferring rights for accessing the subscription from the sponsor account to the subscriber account.

To give her or his approval, the subscriber is preferably to be authenticated at the second phone 112 side and/or at the third server 110 side by using user data entered at the second phone 112 side and possibly sent from the second phone 112 to the third server 110, as a user authentication entity.

The second phone memory(ies) (or an SE memory(ies)) store(s) preferably data relating to a URI, a URL and/or an IP address of an external entity to be addressed, like e.g. the third server 110 and/or the first phone 12, as an interlocutor device.

**Figure 2** depicts an exemplary embodiment of a message flow 20 that involves the first server 16, the second server 18, the third server 110 and the second phone 112.

In the explained example, it is assumed that the first server 16 sends automatically to the second server 18 a message 22 for launching a contribution campaign process, once the first server 16 is informed about a lack of rights for accessing a subscription and a set of one or several identifiers relating to a device(s) to be addressed, as a potential sponsor device(s).

The first server 16 may have further rules to be satisfied prior to launching a contribution campaign process, like e.g. a number of the identified devices to be addressed exceeds a predetermined threshold value, for an identified subscriber in need.

Alternately or additionally, the first server 16 requests preferably a prior approval or consent of the concerned subscriber by addressing her or his identified device(s), like e.g. the first phone 12 associated with an MSISDN1, as an identifier relating to a device used by a subscriber in need.

For instance, the MSISDN1, as particular subscription data, is used for identifying the concerned subscriber in need.

After preferably an SMS, an email, an Unstructured Supplementary Service Data (or USSD) type message 21 originating from the first phone 12 and including an approval for launching a contribution campaign process, the first server 16 sends to the second server 18 a message 22 including a request to get a contribution accompanied with an MSISDN2, as an identifier relating to the second phone 112, as a device identifier set, and the MSISDN1, as the subscriber (in need) identifier.

Then, the second server 18 generates (not represented) an identifier relating to a contribution campaign, like e.g. a counter value (previously initialized) that is incremented for each new session. Such a contribution campaign identifier is associated with MSISDN1, as the subscriber identifier.

The second server 18 determines (not represented) an identifier relating to a third server 110, like e.g. firstname.lastname@rightsgetting.com, that allows addressing the third server 110 preferably dedicated to the subscriber to be helped.

The second server 18 sends to the third server 110 a message 24 including a request to get a contribution accompanied with the (generated) contribution campaign identifier, the (received) MSISDN1, as the subscriber identifier, and the (received) MSISDN2, as the device identifier set.

Optionally, the third server 110 sends to the first phone 12, as the subscriber (in need) device, a message (not represented), like e.g. an SMS or an email, that includes information about a pending contribution campaign (possibly along with its identifier) that solicits the (previously) identified user device(s), as being used by a potential sponsor.

Then, the third server 110 sends to the second phone 112, as an identified device as an addressee within the identified devices (with the device identifier set), a message 26, like e.g. an SMS or an email, that includes a request for getting a contribution accompanied with the contribution campaign identifier and the MSISDN1, as the subscriber (in need) identifier.

Then, the user of the second phone 112 requests, through an MMI at the second phone 112 side, to carry out a transaction from her or his account, as a sponsor and creditor account, to the subscriber account, as a credited account.

The second phone 112 sends to the third server 110 or another server (not represented) a message 28 including a request to perform a transaction from an identified user account to the identified subscriber account accompanied with a transaction amount and the contribution campaign identifier.

The second phone user is preferably authenticated at the second phone 112 side or at the server side (the third server 110 or a backend system) to carry out such a transaction.

Once the transaction or all the transactions are performed, the third server 110 or an(other) server(s) (not represented) sends to the first server 16 a message 210 including a total transaction amount and the subscriber (in need) identifier.

Such an invention solution maximizes the chances to obtain rights for accessing a subscription.

The invention is therefore helpful for the subscriber in need since she or he is able to be helped by the person or the people she or he knows to credit her or his subscription account.

The invention is also convenient for the provider of the subscription service since it keeps a subscriber(s) in need, as a customer(s), and continues to secure the revenue(s) for its subscribers.

The invention solution may use, at the sponsor device side, notably a payment transaction, like e.g. an Europay Mastercard Visa (or EMV) type payment transaction application.

The embodiment that has just been described is not intended to limit the scope of the concerned invention. Other embodiments may be given. As another embodiment example, instead of three servers 16, 18 and 110 that are involved, only one or two servers allows getting rights for accessing a subscription or the like, for a subscriber or user in need.

## Claims

1. A method for accessing a service,
**characterized in that** the method comprises the following steps:
- a first server (16) accesses information relating to a lack of rights for accessing a subscription, the subscription being related to a subscriber to at least one service;
- the first server accesses a set of at least one identifier relating to at least one device (112), as a device identifier set, each of the least one device relating to at least one person who is associated with or linked to the subscriber;
- the first server sends to a second server (18) a message (22) including a request to get a contribution accompanied with the device identifier set and an identifier relating to the subscriber;
- the second server generates an identifier relating to a contribution campaign, the contribution campaign identifier being associated with the identified subscriber;
- the second server determines an identifier relating to a third server (110), the third server identifier allowing to address the third server;
- the second server sends to the third server a message (24) including a request to get a contribution accompanied with the contribution campaign identifier, the subscriber identifier and the device identifier set;
- the third server sends to at least one device (112) identified within the device identifier set a message (26) including a request for getting a contribution accompanied with the contribution campaign identifier and the subscriber identifier;
- the at least one identified device sends to the third server a message (28) including a request to perform a transaction from an identified user account to the identified subscriber accompanied with a transaction amount and the contribution campaign identifier; and
- the first server receives a message (210) including a total transaction amount and the subscriber identifier.

2. Method according to claim 1, wherein, prior to sending to the second server the request to get a contribution, a server or a device (12) relating to the subscriber sends to the first server the device identifier set.

3. Method according to claim 1 or 2, wherein prior to sending to the second server the request to get a contribution, the first server gets from a device relating to the subscriber a message including data relating to an approval of the subscriber.

4. Method according to claim 3, wherein, the data relating to an approval of the subscriber including user authentication data, the first server analyses whether received data does or does not match expected user authentication data, only if the received data matches the expected user authentication data, the first server sends to the second server a message including a request to get a contribution.

5. Method according to any of claims 1 to 4, wherein the at least one identifier relating to at least one device includes at least one element of a group comprising an MSISDN, an IMSI, an IMEI, a URI, an URL and an IP address.

6. Method according to any of claims 1 to 5, wherein the identified user account includes at least one element of a group comprising an identified bank user account, a PAN, a DPAN, a PAN alias, a PAN alternate, an identified voucher user account and an identified user rights account.

7. Method according to any of claims 1 to 6, wherein the third server includes at least one element of a group comprising an SMSC, an OTA server, an OTI server and an OTC server.

8. A first server (16) for accessing a service,
**characterized in that** the first server is configured to:
- access information relating to a lack of rights for accessing a subscription, the subscription being related to a subscriber to at least one service;
- access a set of at least one identifier relating to at least one device (112), as a device identifier set, each of the least one device relating to at least one person who is associated with or linked to the subscriber;
- send to a second server a message (22) including a request to get a contribution accompanied with the device identifier set and an identifier relating to the subscriber; and
- receive a message (210) including a total transaction amount and the subscriber identifier.

9. A second server (18) for accessing a service,
**characterized in that** the second server is configured to:
- receive a message (22) including a request to get a contribution accompanied with a set of at least one identifier relating to at least one device, as a device identifier set, and an identifier relating to the subscriber;
- generate an identifier relating to a contribution campaign, the contribution campaign identifier being associated with the identified subscriber;
- determine an identifier relating to a third server, the third server identifier allowing to address the third server; and
- send to the third server (110) a message (24) including a request to get a contribution accompanied with the contribution campaign identifier, the subscriber identifier and the device identifier set.

10. A system for accessing a service,
**characterized in that**, the system comprising a first server (16), a second server (18) and a third server (110), the first server is configured to:
- access information relating to a lack of rights for accessing a subscription, the subscription being related to a subscriber to at least one service;
- access a set of at least one identifier relating to at least one device (112), as a device identifier set, each of the least one device relating to at least one person who is associated with or linked to the subscriber;
- send to the second server a message (22) including a request to get a contribution accompanied with the device identifier set and an identifier relating to the subscriber; and
- receive a message (210) including a total transaction amount and the subscriber identifier.
**in that** the second server is configured to:
- generate an identifier relating to a contribution campaign, the contribution campaign identifier being associated with the identified subscriber;
- determine an identifier relating to a third server, the third server identifier allowing to address the third server; and
- send to the third server a message (24) including a request to get a contribution accompanied with the contribution campaign identifier, the subscriber identifier and the device identifier set;
and **in that** the third server is configured to:
- send to at least one device identified within the device identifier set a message (26) including a request for getting a contribution accompanied with the contribution campaign identifier and the subscriber identifier; and
- receive from the at least one identified device a message (28) including a request to perform a transaction from an identified user account to the identified subscriber accompanied with a transaction amount and the contribution campaign identifier.
